# EUROPÄISCHE PATENTSCHRIFT

(11) **EP 3 185 269 B1**
(45) Veröffentlichungstag und Bekanntmachung des Hinweises auf die Patenterteilung: **03.04.2019**
(21) Anmeldenummer: 16198198.0
(22) Anmeldetag: 10.11.2016
(51) Int. Cl.: H01H 1/60, H01H 47/00

(54) **VERFAHREN ZUM REINIGEN ELEKTRISCHER KONTAKTE EINER ELEKTRISCHEN SCHALTEINRICHTUNG UND KRAFTFAHRZEUG**
METHOD FOR CLEANING ELECTRICAL CONTACTS OF AN ELECTRICAL SWITCHING DEVICE AND MOTOR VEHICLE
PROCÉDÉ DE NETTOYAGE DES CONTACTS ÉLECTRIQUES D'UN MÉCANISME DE COUPLAGE ÉLECTRIQUE ET VÉHICULE AUTOMOBILE

(30) Priorität: 24.12.2015 DE 102015016992
(43) Veröffentlichungstag der Anmeldung: 28.06.2017
(73) Patentinhaber: AUDI AG, 85045 Ingolstadt (DE)
(72) Erfinder: Pöppel, Armin, 85080 Gaimersheim (DE); Dünsbier, Stefan, 93051 Regensburg (DE)

(56) Entgegenhaltungen:
- DE-A1-102012 011 251
- DE-A1-102012 207 592
- DE-A1-102012 222 129

## Beschreibung

Die Erfindung betrifft ein Verfahren zum Reinigen elektrischer Kontakte einer elektrischen Schaltereinrichtung und ein Kraftfahrzeug mit einer elektrischen Schaltereinrichtung.

Insbesondere elektrische Kontakte, die als Leistungskontakte in Schützen ausgebildet sind, unterliegen einem alterungsbedingten Verschleiß in Abhängigkeit von verschiedenen Faktoren, beispielsweise Temperaturen, Schaltströmen, Tragströmen, Schaltzeiten, mechanischen Vibrationen, und anderen Faktoren. Dieser Verschleiß führt nach einer gewissen Alterung und einer gewissen Anzahl von Schaltzyklen der elektrischen Kontakte über deren Lebensdauer zu einem Ausfall der elektrischen Schaltereinrichtung aufgrund verschmutzter und/oder abgebrannter Kontakte. Es sind verschiedene Maßnahmen bekannt, um insbesondere Verschmutzungen und Korrosionsprodukte auf elektrischen Kontakten zu vermeiden oder zu entfernen.

Beispielsweise ist aus der US 4,617,604 A ein Verfahren bekannt, bei welchem eine elektrische Schaltereinrichtung mit einer Mehrzahl von elektrischen Kontakten teilweise - um die Kontakte zu schonen - im stromlosen Zustand und teilweise - um die Kontakte zu reinigen - im bestromten Zustand geschaltet wird. Dabei führt das Schalten im stromlosen Zustand zu einer Verlängerung der Lebensdauer der elektrischen Schaltereinrichtung, aber auch zum Aufbau von Verschmutzungen und/oder Oxidfilmen. Diese können durch Schalten im bestromten Zustand zumindest teilweise entfernt oder reduziert werden, was allerdings - insbesondere durch die Ausbildung von Funkenüberschlägen oder Bogenentladungen - zu einer verkürzten Lebensdauer der Schaltereinrichtung führt.

Aus der DE 10 2011 115 707 A1 ist ein Verfahren bekannt, bei welchem eine elektrische Schaltereinrichtung gereinigt wird, indem elektrische Kontakte in geschlossenem Zustand mit einem als Gleichstrom ausgebildeten Korrosionsschutzstrom beaufschlagt werden.

Auch aus der US 7,362,011 B2 ist die Beaufschlagung elektrischer Kontakte mit einem Korrosionsschutzstrom bekannt, welcher eine niedrige Frequenz aufweist.

Solche Korrosionsschutzströme wirken als Freibrennströme und bewirken eine elektrische und/oder thermische Reinigung der elektrischen Kontakte.

Aus der DE 10 2012 011 251 A1 geht ein Verfahren hervor, bei dem in einem Reparaturmodus ein Steuerkreis mit aufeinanderfolgenden Impulsen beaufschlagt wird, wobei ein Anker mit einer Kontaktbrücke in Schwingungen versetzt und die Kontaktbrücke freigerüttelt wird, sodass der Anker mit der Kontaktbrücke durch die Federkraft einer Rückstellfeder wieder zurückgeführt und ein Lastkreis somit geöffnet wird.

Aus der DE 10 2012 207 592 A1 geht ebenfalls ein Verfahren hervor, bei welchem ein elektromagnetischer Schalter mit einer Ansteuerspannung mit vorgebbarem Verlauf angesteuert wird, wobei durch die Ansteuerung mit dem vorgebbaren Verlauf der Ansteuerspannung ein mechanisches Rütteln an einem Kontaktmittel des elektromagnetischen Schalters bewirkt wird. Somit wird eine Bruchstelle erzeugt und ein Lösen des Kontaktmittels von mindestens einem Kontakt ermöglicht.

Gemäß den aus DE 10 2012 011 251 A1 und DE 10 2012 207 592 A1 bekannten Verfahren wird also durch mechanisches Rütteln insbesondere eine Geschlossenstellung elektrischer Kontakte verlassen.

Aufgabe der Erfindung ist es demgegenüber, ein Verfahren zum Reinigen elektrischer Kontakte einer elektrischen Schaltereinrichtung sowie ein Kraftfahrzeug mit einer solchen elektrischen Schaltereinrichtung zu schaffen, wobei die Reinigung der elektrischen Kontakte auf alternative und vorzugsweise verbesserte Weise erfolgt.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Verfahren zum Reinigen elektrischer Kontakte einer elektrischen Schaltereinrichtung geschaffen wird, wobei wenigstens ein elektrischer Kontakt gereinigt wird, der wenigstens ein erstes Kontaktelement und wenigstens ein zweites Kontaktelement aufweist, die relativ zueinander in eine Offenstellung und in eine Geschlossenstellung verlagerbar sind. Das erste und das zweite Kontaktelement werden in der Geschlossenstellung angeordnet, wobei das erste Kontaktelement und das zweite Kontaktelement durch Anlegen einer elektrischen Wellenform in der Geschlossenstellung zu mechanischen Vibrationen relativ zueinander angeregt werden, ohne dass die Geschlossenstellung verlassen wird. Aufgrund der Anregung zu mechanischen Vibrationen oder Schwingungen der Kontaktelemente relativ zueinander reiben diese in ihrer Geschlossenstellung an- oder aufeinander, wodurch sich ein mechanischer Reinigungseffekt ergibt. Die Kontakte führen dabei eine Selbstreinigung durch, woraus sich eine Verlangsamung oder Rückgängigmachung des Verschleißes, insbesondere durch Verschmutzung und/oder Korrosion, für die elektrischen Kontaktelemente und damit den elektrischen Kontakt insgesamt ergibt. Dabei zeigt sich, dass die mechanische Reinigung zum einen sehr effizient, zum anderen aber auch sehr schonend ist, insbesondere da die Kontaktelemente dabei geschlossen bleiben und somit keine Funken- oder Bogenentladungsereignisse zu befürchten sind, und da sie keinem hohen Freibrennstrom ausgesetzt werden müssen.

Unter einem elektrischen Kontakt wird hier insbesondere eine schaltbare elektrische Verbindung verstanden, welche ein erstes Kontaktelement und ein zweites Kontaktelement aufweist, die relativ zueinander einerseits in eine Offenstellung, in welcher der elektrische Kontakt geöffnet ist, und in eine Geschlossenstellung, in welcher der elektrische Kontakt geschlossen ist, verlagerbar sind. Somit kann der elektrische Kontakt durch Verlagerung des ersten Kontaktelements und des zweiten Kontaktelements relativ zueinander geöffnet und geschlossen werden. Es ist möglich, dass nur eines der Kontaktelemente tatsächlich verlagert wird, während das andere Kontaktelement in Ruhe bleibt. Es ist aber auch möglich, dass beide Kontaktelemente verlagert werden.

Unter einer elektrischen Schaltereinrichtung wird eine Einrichtung verstanden, die wenigstens einen elektrischen Kontakt aufweist, wobei die Schaltereinrichtung eingerichtet ist, um den wenigstens einen elektrischen Kontakt zu schalten. Bevorzugt weist die elektrische Schaltereinrichtung eine Mehrzahl elektrischer Kontakte auf, wobei sie eingerichtet ist, die Mehrzahl elektrischer Kontakte - vorzugsweise unabhängig voneinander - zu schalten.

Die elektrische Schaltereinrichtung ist bevorzugt als Leistungsschaltereinrichtung ausgebildet und somit eingerichtet, um elektrische Leistungsverbindungen zu schalten - im Unterschied zu einer Schaltereinrichtung, die lediglich eingerichtet ist, um Steuerspannungen oder Steuerströme zu schalten.

Unter einem Kontaktelement wird ein Element verstanden, welches geeignet und/oder eingerichtet ist, mit einem weiteren Kontaktelement zusammenzuwirken, um einen elektrischen Kontakt herzustellen oder zu trennen. Das Kontaktelement ist insbesondere elektrisch leitfähig ausgebildet.

Unter einer Offenstellung wird insbesondere eine Relativposition der Kontaktelemente verstanden, in der diese derart voneinander beabstandet angeordnet sind, dass der elektrische Kontakt geöffnet ist. Unter einer Geschlossenstellung wird eine Relativanordnung der Kontaktelemente verstanden, in welcher diese derart zueinander angeordnet sind, dass der elektrische Kontakt geschlossen ist. Insbesondere sind die Kontaktelemente in der Geschlossenstellung in mechanischem Kontakt miteinander, berühren sich also, sodass ein elektrischer Strom oder ein elektrisches Signal über die Kontaktelemente übermittelt werden kann.

Dass die Kontaktelemente in der Offenstellung und in der Geschlossenstellung angeordnet werden können, bedeutet insbesondere, dass diese derart geschaltet werden können, dass sie voneinander beabstandet oder in mechanischem, berührendem Kontakt miteinander sind.

Unter einer elektrischen Wellenform wird ein elektrisches Signal, insbesondere ein Strom oder eine Spannung, verstanden, welches zeitlich veränderlich ist, insbesondere zeitlich verändert wird. Dabei kann es sich um eine - insbesondere sinusförmige - Wechselspannung, ein Dreieckssignal, ein Rechtecksignal, oder um eine andere geeignete Wellenform handeln. Besonders bevorzugt wird als elektrische Wellenform eine Wechselspannung verwendet, wobei diese sinusförmig ausgebildet sein, jedoch auch eine andere Form aufweisen kann, beispielsweise die Form eines Dreieck- oder Rechtecksignals. Es ist möglich, dass die elektrische Wellenform Vibrationspulse aufweist, welche die Kontaktelemente zu mechanischen Vibrationen anregt.

Unter mechanischen Vibrationen werden insbesondere Relativbewegungen der Kontaktelemente zueinander verstanden, wobei es möglich ist, dass nur eines der Kontaktelemente tatsächlich bewegt wird, während das andere raumfest angeordnet bleibt. Es ist aber auch möglich, dass beide Kontaktelemente relativ zueinander bewegt werden. Die Schwingungsformen der mechanischen Vibrationen liegen dabei vorzugsweise in einer Ebene, auf welcher eine Richtung, in welcher der elektrische Strom von einem Kontaktelement zu dem anderen Kontaktelement fließt, senkrecht steht. Die Kontaktelemente reiben also aufgrund der mechanischen Vibrationen quer zueinander, sodass vermieden wird, dass sie aufgrund der Vibrationen kurzzeitig öffnen und wieder schließen. Vielmehr verbleiben sie auch während der Vibrationen in geschlossenem Zustand und in mechanischem Kontakt miteinander. Durch die quer verlaufenden Schwingungen reinigen sich die Kontaktelemente schnell und effektiv selbst. Durch die gezielt bewirkten Quervibrationsbewegungen der Kontaktelemente wird ein Selbstreinigen derselben und ein Verlangsamen oder Rückgängigmachen des Verschleißes bewirkt.

Gemäß einer Weiterbildung der Erfindung ist vorgesehen, dass die elektrische Wellenform im Betrieb der Schaltereinrichtung einem elektrischen Strom, insbesondere einem Betriebsstrom, überlagert wird. Dabei fließt also ein elektrischer Strom über die geschlossenen Kontaktelemente, mithin über den elektrischen Kontakt, dem die elektrische Wellenform zur Anregung der mechanischen Vibrationen überlagert wird. Da die Kontaktelemente aufgrund der Vibrationen nicht voneinander abheben, sondern in der Geschlossenstellung verbleiben, kann die Reinigung im Betrieb der Schaltereinrichtung und insbesondere im stromführenden Zustand der Schaltereinrichtung in der Geschlossenstellung durchgeführt werden. Dabei bewirkt die Quervibration der Kontaktelemente aufeinander im stromführenden Zustand keinerlei erhöhten Verschleiß, weil Funken- oder Bogenentladungsphänomene vermieden werden.

Gemäß einer Ausgestaltung der Erfindung wird die elektrische Wellenform im Betrieb der Schaltereinrichtung einem Gleichstrom überlagert. Gemäß einer anderen Ausgestaltung der Erfindung wird die elektrische Wellenform im Betrieb der Schaltereinrichtung einem Wechselstrom überlagert, wobei in diesem Fall vorzugsweise die Frequenz der elektrischen Wellenform von der Frequenz des Wechselstroms verschieden ist, wobei insbesondere bevorzugt die Frequenz der elektrischen Wellenform größer ist, vorzugsweise um ein Vielfaches größer, als die Frequenz des Wechselstroms.

Gemäß einer Weiterbildung der Erfindung ist vorgesehen, dass die elektrische Wellenform mit wenigstens einer Frequenz erzeugt wird, die geeignet ist, um mechanische Vibrationen bei einer Eigenfrequenz des elektrischen Kontakts zu erzeugen. Die wenigstens eine Frequenz der elektrischen Wellenform liegt also bevorzugt zumindest in der Nähe der Resonanz- oder Eigenfrequenz des elektrischen Kontakts, wodurch diese sehr effizient zu mechanischen Vibrationen angeregt werden kann. Die Resonanzfrequenz des elektrischen Kontakts bestimmt sich dabei insbesondere durch die Massen der Kontaktelemente, welche an den mechanischen Schwingungen beteiligt sind.

Es ist möglich, dass die elektrische Wellenform mit genau einer Frequenz, also frequenzrein, erzeugt wird. Alternativ ist es aber auch möglich, dass die elektrische Wellenform mit einem Frequenzband erzeugt wird oder eine Überlagerung einer Mehrzahl verschiedener Frequenzen aufweist. Dabei liegt zumindest eine Frequenz vorzugsweise im Bereich der Eigenfrequenz des elektrischen Kontakts derart, dass dieser effizient zu mechanischen Schwingungen angeregt wird. Das Frequenzband liegt vorzugsweise ebenfalls in der Nähe der Eigenfrequenz des elektrischen Kontakts, wobei es vorzugsweise die Eigenfrequenz umfasst. Insbesondere ist es möglich, dass das Frequenzband um die Eigenfrequenz des elektrischen Kontakts zentriert ist.

Die wenigstens eine Frequenz der elektrischen Wellenform wird vorzugsweise im Bereich von mehreren kHz erzeugt. Es wird also eine höherfrequente Anregungsfrequenz im Resonanzfrequenzbereich des elektrischen Kontakts an diesen angelegt, wodurch dieser effizient zu höherfrequenten Bewegungen, insbesondere mechanischen Vibrationen im kHz-Bereich, angeregt wird.

Gemäß einer Weiterbildung der Erfindung ist vorgesehen, dass die elektrische Wellenform mit einer Frequenz erzeugt wird, die der Eigenfrequenz oder einem Vielfachen der Eigenfrequenz des elektrischen Kontakts entspricht. Dabei kann eine besonders effiziente Anregung der Kontaktelemente zu mechanischen Vibrationen erfolgen. Unter einem Vielfachen der Eigenfrequenz wird hier insbesondere ein ganzzahliges Vielfaches verstanden, insbesondere also Obertöne oder Oberschwingungen der Eigenfrequenz des elektrischen Kontakts.

Gemäß einer Weiterbildung der Erfindung ist vorgesehen, dass die Eigenfrequenz des elektrischen Kontakts durch Anlegen von weißem Rauschen an den elektrischen Kontakt ermittelt wird. Auf diese Weise kann die Resonanzfrequenz oder Eigenfrequenz sehr einfach und schnell ermittelt werden, insbesondere indem das Dämpfungsverhalten des elektrischen Kontakts für die im Spektrum des weißen Rauschens enthaltenen Frequenzen untersucht wird. Die Ermittlung der Eigenfrequenz erfolgt bevorzugt vor der Reinigung der elektrischen Kontakte. Dabei ist es möglich, dass dies einmalig durchgeführt wird, wobei anschließend eine Frequenz, eine Überlagerung von Frequenzen, oder ein Frequenzband für die elektrische Wellenform zur Reinigung festgelegt und beibehalten wird. Es ist aber auch möglich, dass die Eigenfrequenz mehrfach, insbesondere in vorbestimmten Intervallen oder bedarfsgerecht, neu ermittelt wird, was den Vorteil hat, dass die Anregung durch die elektrische Wellenform an insbesondere alterungsbedingte Veränderungen der Kontaktelemente, beispielsweise durch Massenverluste aufgrund mechanischen Abriebs, angepasst werden kann. Auch in diesem Fall wird aber das Anlegen von weißem Rauschen an den elektrischen Kontakt zumindest primär nicht zum Zwecke der Reinigung genutzt, sondern vielmehr dazu, die Eigenfrequenz jeweils neu zu ermitteln.

Gemäß einer Weiterbildung der Erfindung ist vorgesehen, dass die elektrische Schaltereinrichtung als Schütz ausgebildet ist. Dabei wird unter einem Schütz, der auch als Schaltschütz bezeichnet wird, ein insbesondere elektrisch oder pneumatisch betätigter Schalter für elektrische Leistungen, insbesondere große elektrische Leistungen, verstanden. Vorzugsweise weist ein Schütz zwei Schaltstellungen auf und schaltet bevorzugt monostabil. Alternativ ist es möglich, dass die elektrische Schaltereinrichtung als Relais ausgebildet ist. Ein Relais ist dabei typischerweise für geringere Schaltleistungen ausgelegt als ein Schütz.

Im Rahmen des Verfahrens werden also insbesondere elektrische Kontakte einer elektrischen Schaltereinrichtung gereinigt, welche als Schütz oder als Relais ausgebildet ist.

Gemäß einer Weiterbildung der Erfindung ist vorgesehen, dass elektrische Kontakte einer elektrischen Schaltereinrichtung gereinigt werden, welche als elektrische Schaltereinrichtung für ein Kraftfahrzeug, insbesondere für eine Bordelektronik eines Kraftfahrzeugs, ausgebildet ist. Mithilfe des Verfahrens kann die Zuverlässigkeit und Lebensdauer der Bordelektronik eines Kraftfahrzeugs in vorteilhafter Weise verbessert werden.

Gemäß einer Weiterbildung der Erfindung ist vorgesehen, dass wenigstens ein elektrischer Kontakt gereinigt wird, welcher Kontaktelemente aufweist, die eine geometrische Form in einem Berührungsbereich aufweisen, welche eine Punktberührung oder eine Linienberührung der Kontaktelemente in der Geschlossenstellung bedingt. Dies bedeutet insbesondere, dass wenigstens eines der Kontaktelemente in dem Berührungsbereich zwischen den Kontaktelementen so geformt ist, dass eine Punkt- oder Linienberührung der Kontaktelemente in der Geschlossenstellung verwirklicht wird. Beispielsweise ist es möglich, dass wenigstens eines der Kontaktelemente in dem Berührungsbereich konvex geformt ist. Das andere Kontaktelement kann dann beispielsweise flach oder ebenfalls konvex geformt sein. In diesem Fall berühren sich die Kontaktelemente in dem Berührungsbereich in der Geschlossenstellung vorzugsweise nur im Sinne einer Punkt- oder Linienberührung. Vorteilhaft hieran ist, dass ein elektrischer Strom in den Kontaktelementen in unmittelbarer Nachbarschaft zu dem punktförmigen oder linienförmigen Berührungsbereich in dem einen Kontaktelement radial einwärts und in dem anderen Kontaktelement radial auswärts fließen muss, um zu dem Berührungspunkt oder der Berührungslinie beziehungsweise von dieser weg zu gelangen. Der Berührungspunkt oder die Berührungslinie stellen also quasi einen Flaschenhals für den elektrischen Strom dar. Dabei bilden sich in den Kontaktelementen jeweils in gegensätzliche Richtungen gerichtete elektrische Ströme aus, welche Magnetfelder erzeugen, die sich gegenseitig abstoßen. Diese abstoßenden Kräfte werden durch die zeitliche Variation der elektrischen Wellenform zeitlich verändert, insbesondere periodisch variiert. Dies bewirkt letztlich in sehr effizienter Weise eine mechanische Relativbewegung zwischen den Kontaktelementen.

Gemäß einer Weiterbildung der Erfindung ist vorgesehen, dass wenigstens eines der Kontaktelemente, ausgewählt aus dem ersten Kontaktelement und dem zweiten Kontaktelement, in der Geschlossenstellung beweglich gelagert ist. Besonders bevorzugt ist das wenigstens eine Kontaktelement elastisch gelagert. Es kann sich daher insbesondere bei einer zeitlichen Variation abstoßender Kräfte zwischen den Kontaktelementen zumindest geringfügig bewegen, was die Ausbildung mechanischer Relativbewegungen zwischen den Kontaktelementen unterstützt. Besonders bevorzugt ist dabei das wenigstens eine Kontaktelement verkippbar gelagert, sodass es relativ zu dem anderen Kontaktelement hin und her kippen kann. So kann in der Geschlossenstellung eine verkippende Querbewegung erzeugt werden, wobei die Kontaktelemente aneinander reiben, ohne dass der Kontakt geöffnet wird.

Die Aufgabe wird schließlich auch gelöst, indem ein Kraftfahrzeug geschaffen wird, welches eine elektrische Schaltereinrichtung aufweist, sowie ein Steuergerät, dass eingerichtet ist zur Durchführung einer der zuvor beschriebenen Ausführungsformen des Verfahrens. Das Steuergerät ist dabei insbesondere bevorzugt eingerichtet, um den wenigstens einen elektrischen Kontakt in der Geschlossenstellung seiner Kontaktelemente mit einer elektrischen Wellenform zu beaufschlagen, welche die Kontaktelemente zu mechanischen Vibrationen relativ zueinander anregt. Die Steuereinrichtung ist bevorzugt eingerichtet, um die elektrische Wellenform im Betrieb der Schaltereinrichtung einem elektrischen Strom zu überlagern. In Zusammenhang mit dem Kraftfahrzeug ergeben sich insbesondere die Vorteile, die bereits in Zusammenhang mit dem Verfahren erläutert wurden.

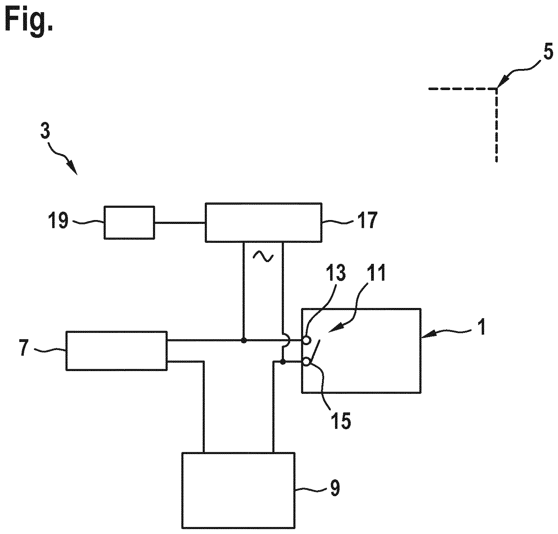

Die Erfindung wird im Folgenden anhand der Zeichnung näher erläutert. Dabei zeigt die einzige Figur eine schematische Darstellung eines Ausführungsbeispiels einer elektrischen Schaltereinrichtung.

Die einzige Figur zeigt eine schematische Darstellung einer elektrischen Schaltereinrichtung 1, die hier in einer übergeordneten elektrischen Einrichtung 3, beispielsweise einer Bordelektronik eines Kraftfahrzeugs 5, angeordnet ist. Die elektrische Schaltereinrichtung 1 dient dabei insbesondere dem Schalten elektrischer Leistung, wobei sie besonders bevorzugt als Schütz oder als Relais ausgebildet ist.

Die elektrische Schaltereinrichtung 1 ist mit einer elektrischen Leistungsquelle 7, die vorzugsweise als Gleichspannungsquelle oder als Gleichstromquelle ausgebildet ist, elektrisch verbunden und eingerichtet, um eine elektrische Last 9 oder Senke, insbesondere einen Verbraucher, mit der elektrischen Leistungsquelle 7 in einer ersten Schaltstellung zu verbinden und in einer zweiten Schaltstellung von der elektrischen Leistungsquelle 7 zu trennen.

Hierzu weist die elektrische Schaltereinrichtung 1 wenigstens einen elektrischen Kontakt 11 auf, der ein erstes Kontaktelement 13 und ein zweites elektrisches Kontaktelement 15 aufweist. Diese sind relativ zueinander in eine Offenstellung und in eine Geschlossenstellung verlagerbar, sodass der elektrische Kontakt 11 geöffnet und geschlossen werden kann. Dabei entspricht die Offenstellung der Kontaktelemente 13, 15 einer Schaltposition der elektrischen Schaltereinrichtung 1, in welcher die elektrische Last 9 von der Leistungsquelle 7 getrennt ist, wobei die Geschlossenstellung der Kontaktelemente 13,15 einer Schaltposition der elektrischen Schaltereinrichtung 1 entspricht, in welcher die elektrische Last 9 mit der elektrischen Leistungsquelle 7 elektrisch verbunden ist.

Es ist ein Wellenformerzeugungsmittel 17 vorgesehen, welches vorzugsweise als Wechselspannungsquelle ausgebildet ist, und welches mit den Kontaktelementen 13, 15 derart wirkverbunden ist, dass an diese eine elektrische Wellenform, insbesondere eine Wechselspannung, derart angelegt werden kann, dass die Kontaktelemente 13, 15 relativ zueinander zu mechanischen Vibrationen angeregt werden.

Weiterhin ist ein Steuergerät 19 vorgesehen, welches eingerichtet ist, um das Wellenformerzeugungsmittel 17 anzusteuern, sodass dieses - insbesondere in vorbestimmten zeitlichen Intervallen - bedarfsgerecht oder in anderer Weise, eine elektrische Wellenform erzeugen kann, welche an die Kontaktelemente 13, 15 zu deren Anregung zu mechanischen Relativbewegungen angelegt werden kann.

Das Wellenformerzeugungsmittel 17 ist insbesondere derart mit der elektrischen Schaltereinrichtung 1 elektrisch verbunden, dass die elektrische Wellenform, welche durch das Wellenformerzeugungsmittel 17 erzeugt wird, im Betrieb der Schaltereinrichtung 1 einem von der elektrischen Leistungsquelle 7 generierten elektrischen Strom überlagert wird.

Die elektrische Wellenform wird durch das Wellenformerzeugungsmittel 17 bevorzugt mit wenigstens einer Frequenz erzeugt, die geeignet ist, um mechanische Vibrationen bei einer Eigenfrequenz des elektrischen Kontakts 11 zu erzeugen. Besonders bevorzugt wird die elektrische Wellenform dabei mit einer Frequenz erzeugt, die der Eigenfrequenz oder einem Vielfachen der Eigenfrequenz des elektrischen Kontakts 11 entspricht. Es ist möglich, dass diese Eigenfrequenz einmalig oder mehrfach durch Anlegen von weißem Rauschen mittels dem Wellenformerzeugungsmittel 17 an den elektrischen Kontakt 11 ermittelt wird.

Durch Anregen der elektrischen Kontaktelemente 13, 15 zu mechanischen Vibrationen relativ zueinander werden diese insbesondere zu höherfrequenten Quervibrationsbewegungen, insbesondere im kHz-Bereich, angeregt, wodurch diese - ohne dass die Geschlossenstellung verlassen wird - schnell und effektiv mechanisch gereinigt werden.

Die Kontaktelemente 13, 15 weisen insbesondere eine geometrische Form in einem Berührungsbereich auf, der eine Punktberührung oder eine Linienberührung der Kontaktelemente 13,15 in der Geschlossenstellung bedingt. Dabei ist es insbesondere möglich, dass wenigstens eines der Kontaktelemente 13, 15 in dem Berührungsbereich konvex ausgebildet ist. Weiterhin ist es möglich, dass wenigstes eines der Kontaktelemente 13, 15 in der Geschlossenstellung beweglich, insbesondere elastisch, gelagert ist.

Insgesamt zeigt sich, dass durch das Verfahren und bei dem Kraftfahrzeug eine sehr effiziente und zugleich schonende Reinigung insbesondere von Leistungskontakten einer elektrischen Schaltereinrichtung bewirkt werden kann, sodass ein alterungsbedingter Verschleiß verlangsamt oder sogar rückgängig gemacht werden kann, ohne dass sich die Reinigung selbst negativ auf die Lebensdauer der elektrischen Schaltereinrichtung auswirken würde.

Dabei erfolgt insbesondere eine Selbstreinigung des elektrischen Kontakts auf der Grundlage einer elektromagnetischen Repulsion.

## Patentansprüche

1. Verfahren zum Reinigen elektrischer Kontakte (11) einer elektrischen Schaltereinrichtung (1), wobei
- wenigstens ein elektrischer Kontakt (11) gereinigt wird, der wenigstens ein erstes Kontaktelement (13) und wenigstens ein zweites Kontaktelement (15) aufweist, wobei die Kontaktelemente (13,15) relativ zueinander in eine Offenstellung und in eine Geschlossenstellung verlagerbar sind, wobei
- das erste Kontaktelement (13) und das zweite Kontaktelement (15) in der Geschlossenstellung angeordnet werden,
**dadurch gekennzeichnet, dass**
- das erste Kontaktelement (13) und das zweite Kontaktelement (15) durch Anlegen einer elektrischen Wellenform an den elektrischen Kontakt (11) in der Geschlossenstellung zu mechanischen Vibrationen relativ zueinander angeregt werden, ohne dass die Geschlossenstellung verlassen wird.

2. Verfahren nach Anspruch 1, **dadurch gekennzeichnet, dass** die elektrische Wellenform im Betrieb der Schaltereinrichtung (1) einem elektrischen Strom, insbesondere einem Betriebsstrom, überlagert wird.

3. Verfahren nach einem der vorhergehenden Ansprüche, **dadurch gekennzeichnet, dass** die elektrische Wellenform mit wenigstens einer Frequenz erzeugt wird, die geeignet ist, um mechanische Vibrationen bei einer Eigenfrequenz des elektrischen Kontakts (11) zu erzeugen.

4. Verfahren nach einem der vorhergehenden Ansprüche, **dadurch gekennzeichnet, dass** die elektrische Wellenform mit einer Frequenz erzeugt wird, die der Eigenfrequenz oder einem Vielfachen der Eigenfrequenz des elektrischen Kontakts (11) entspricht.

5. Verfahren nach einem der vorhergehenden Ansprüche, **dadurch gekennzeichnet, dass** die Eigenfrequenz durch Anlegen von weißem Rauschen an den elektrischen Kontakt (11) ermittelt wird.

6. Verfahren nach einem der vorhergehenden Ansprüche, **dadurch gekennzeichnet, dass** die elektrische Schaltereinrichtung (1) als Schütz oder als Relais ausgebildet ist.

7. Verfahren nach einem der vorhergehenden Ansprüche, **dadurch gekennzeichnet, dass** die elektrische Schaltereinrichtung (1) als Schaltereinrichtung für ein Kraftfahrzeug, insbesondere für eine Bordelektronik eines Kraftfahrzeugs, ausgebildet ist.

8. Verfahren nach einem der vorhergehenden Ansprüche, **dadurch gekennzeichnet, dass** wenigstens ein elektrischer Kontakt (11) gereinigt wird, welcher Kontaktelemente (13,15) aufweist, die eine geometrische Form in einem Berührungsbereich aufweisen, die eine Punktberührung oder Linienberührung der Kontaktelemente (13,15) in der Geschlossenstellung bedingt.

9. Verfahren nach einem der vorhergehenden Ansprüche, **dadurch gekennzeichnet, dass** wenigstens ein Kontaktelement (13,15), ausgewählt aus dem ersten Kontaktelement (13) und dem zweiten Kontaktelement (15), in der Geschlossenstellung beweglich, insbesondere elastisch gelagert ist.

10. Kraftfahrzeug (5), mit einer elektrischen Schaltereinrichtung (1) und einem Steuergerät (19), wobei das Steuergerät (19) eingerichtet ist zur Durchführung eines Verfahrens nach einem der Ansprüche 1 bis 9.

## Claims

1. Method for cleaning electrical contacts (11) of an electrical switching device (1),
wherein
- at least one electrical contact (11) is cleaned which has at least one first contact element (13) and at least one second contact element (15), wherein the contact elements (13,15) can be displaced relative to one another into an open position and into a closed position, wherein
- the first contact element (13) and the second contact (15) are arranged in the closed position,
**characterised in that**
- the first contact element (13) and the second contact element (15) by applying an electrical waveform to the electrical contact (11) are excited to undergo mechanical vibrations relative to each other in the closed position without the closed position being left.

2. Method according to claim 1, **characterised in that** the electrical waveform during the operation of the switching device (1) is superimposed on an electrical current, in particular an operating current.

3. Method according to any of the preceding claims, **characterised in that** the electrical waveform is generated with at least one frequency, which is suitable for generating mechanical vibrations at a natural frequency of the electrical contact (11).

4. Method according to any of the preceding claims, **characterised in that** the electrical waveform is generated with a frequency, which corresponds to the natural frequency or a multiple of the natural frequency of the electrical contact (11).

5. Method according to any of the preceding claims, **characterised in that** the natural frequency is determined by applying white noise to the electrical contact (11).

6. Method according to any of the preceding claims, **characterised in that** the electrical switching device (1) is designed as a contactor or as a relay.

7. Method according to any of the preceding claims, **characterised in that** the electrical switching device (1) is configured as a switching device for a motor vehicle, in particular for an on-board electronic system of a motor vehicle.

8. Method according to any of the preceding claims, **characterised in that** at least one electric contact (11) is cleaned, which has contact elements (13, 15), which have a geometric form in a contact area, which causes a point contact or line contact of the contact elements (13, 15) in the closed position.

9. Method according to any of the preceding claims, **characterised in that** at least one contact element (13,15), selected from the first contact element (13) and the second contact element (15), is supported for movement in the closed position, in particular is supported elastically.

10. Motor vehicle (5), with an electrical switching device (1) and a control device (19), wherein the control device (19) is configured to perform a method according to any of claims 1 to 9.

## Revendications

1. Procédé de nettoyage de contacts électriques (11) d'un dispositif de commutation électrique (1), dans lequel :
- au moins un contact électrique (11) est nettoyé, qui présente au moins un premier élément de contact (13) et au moins un second élément de contact (15), dans lequel les éléments de contact (13,15) peuvent être déplacés l'un par rapport à l'autre dans une position ouverte et dans une position fermée, dans lequel
- le premier élément de contact (13) et le second élément de contact (15) sont agencés en position fermée,
**caractérisé en ce que**
- le premier élément de contact (13) et le second élément de contact (15) sont soumis à des vibrations mécaniques l'un par rapport à l'autre par application d'une forme d'onde électrique au contact électrique (11) dans la position fermée sans quitter la position fermée.

2. Procédé selon la revendication 1, **caractérisé en ce que** la forme d'onde électrique est superposée, lors du fonctionnement du dispositif de commutation (1), à un courant électrique, en particulier à un courant de fonctionnement.

3. Procédé selon l'une quelconque des revendications précédentes, **caractérisé en ce que** la forme d'onde électrique est produite avec au moins une fréquence qui convient pour produire des vibrations mécaniques à une fréquence propre du contact électrique (11).

4. Procédé selon l'une quelconque des revendications précédentes, **caractérisé en ce que** la forme d'onde électrique est produite avec une fréquence qui correspond à la fréquence propre ou à un multiple de la fréquence propre du contact électrique (11).

5. Procédé selon l'une quelconque des revendications précédentes, **caractérisé en ce que** la fréquence propre est déterminée par application de bruit blanc au contact électrique (11).

6. Procédé selon l'une quelconque des revendications précédentes, **caractérisé en ce que** le dispositif de commutation électrique (1) est réalisé sous la forme d'un contacteur-interrupteur ou d'un relais.

7. Procédé selon l'une quelconque des revendications précédentes, **caractérisé en ce que** le dispositif de commutation électrique (1) est réalisé sous la forme d'un dispositif de commutation pour un véhicule automobile, en particulier pour une électronique de bord d'un véhicule automobile.

8. Procédé selon l'une quelconque des revendications précédentes, **caractérisé en ce qu'**au moins un contact électrique (11) est nettoyé, qui présente des éléments de contact (13,15) qui présentent une forme géométrique dans une zone de contact qui conditionne un contact ponctuel ou un contact linéaire des éléments de contact (13,15) dans la position fermée.

9. Procédé selon l'une quelconque des revendications précédentes, **caractérisé en ce qu'**au moins un élément de contact (13,15) choisi parmi le premier élément de contact (13) et le second élément de contact (15) est monté mobile en position fermée, en particulier monté de manière élastique.

10. Véhicule automobile (5) pourvu d'un dispositif de commutation électrique (1) et d'un appareil de commande (19), dans lequel l'appareil de commande (19) est aménagé pour exécuter un procédé selon l'une quelconque des revendications 1 à 9.
